# EUROPÄISCHE PATENTSCHRIFT

(11) **EP 0 740 966 B1**
(45) Veröffentlichungstag und Bekanntmachung des Hinweises auf die Patenterteilung: **03.03.1999**
(21) Anmeldenummer: 96109147.7
(22) Anmeldetag: 22.04.1994
(51) Int. Cl.: B09B 3/00

(54) **Verfahren und Vorrichtung zur Abscheidung flüchtiger Komponenten aus festen Gegenständen**
Method and device for separating volatile components from solid objects
Procédé et dispositif pour la séparation de composants volatils à partir d'objets solides

(30) Priorität: 25.05.1993 DE 4317291
(43) Veröffentlichungstag der Anmeldung: 06.11.1996
(62) Teilanmeldung aus: 94106300.0
(73) Patentinhaber: Umwelt-Technics-Nord GmbH, D-22851 Norderstedt (DE)
(72) Erfinder: Gronholz, Claus, Dipl.-Ing., 22851 Norderstedt (DE)
(74) Vertreter: Patentanwälte Hauck, Graalfs, Wehnert, Döring, Siemons

(56) Entgegenhaltungen:
- EP-A- 0 156 562
- EP-A- 0 412 055
- EP-A- 0 423 039
- EP-A- 0 529 203
- DE-A- 3 314 824
- DE-A- 3 937 331

## Beschreibung

Die Erfindung bezieht sich auf ein Verfahren zur Abscheidung flüchtiger Komponenten aus festen Gegenständen, wie zum Beispiel Holz, nach dem Oberbegriff des Patentanspruchs 1. Die Erfindung bezieht sich ferner auf eine Vorrichtung zur Abscheidung flüchtiger Komponenten aus festen Gegenständen, nach dem Oberbegriff des Anspruchs 5.

Häufig sind feste Gegenstände aus Holz, Metall oder anderen Werkstoffen kontaminiert und sind zum Beispiel aus diesem Grunde als chemischer Abfall zu betrachten, der einer aufwendigen Spezialdeponierung bedarf, falls eine Deponierung überhaupt zugelassen ist. Es besteht daher auch die Notwendigkeit, derartige Gegenstände zu dekontaminieren

Aus EP-A-529 20 ist ein Verfahren zur Entsorgung von mit Teeröl imprägniertem Holz bekanntgeworden. Bei dem bekannten Verfahren wird das Holz unter Luftabschluß einer Wärmebehandlung unterworfen und dabei zu einem Produkt umgewandelt, das frei ist von toxischen Stoffen, insbesondere von polyzyklischen aromatischen Kohlenwasserstoffen. Die Wärmebehandlung kann mit Unterdruck erfolgen.

Aus DE-A-39 37 331 und EP-A-423 039 ist bekannt, kontaminierte Schüttgüter in einem Gefaß induktiv zu erhitzen und damit zu entgasen. Aus der DE-A-39 37 331 ist zudem bekannt, dem zu kontaminierenden Gut Metallpartikel zuzumischen.

Der Erfindung liegt die Aufgabe zugrunde, ein Verfahren und eine Vorrichtung zur Abscheidung flüchtiger Komponenten aus festen Gegenständen zu schaffen mit den bzw. der flüchtige Komponenten auch aus festen Gegenständen entfernt werden können.

Diese Aufgabe wird durch die Ansprüche 1 und 5 gelöst.

Bei dem erfindungsgemäßen Verfahren ist vorgesehen, daß der Gegenstand in einem gasdichten Raum eines Induktionsgefäßes gehalten wird. Der Gegenstand wird in einem Bett aus Metallspänen gelagert. Es ist zwar denkbar, den Gegenstand auf dem Boden des Gefäßes abzulegen und anschließend den verbleibenden Raum mit Spänen zu bedecken. Es ist indessen vorzuziehen, den Gegenstand vollständig mit Spänen zu umgeben. Diese Maßnahme hat die Wirkung, daß die Induktionswärme, die in dem Metallspänebett erzeugt wird, intensiv auf den Gegenstand übertragen wird und daher zu einer entsprechenden Erwärmung führt. In die Späne wird außerdem inertes Gas, zum Beispiel Stickstoff, zu Spülzwecken injiziert. Vor der Entnahme des Gegenstands werden die Metallspäne entfernt.

Vorzugsweise werden Eisenspäne verwendet. Sie können mit Hilfe eines Magneten aus dem Induktionsgefäß "abgesaugt" werden.

Da die Metallspäne ebenfalls vollständig dekontaminiert sind, können sie stets wiederverwendet werden.

Der erfindungsgemäße Reaktor zur Durchführung des erfindungsgemäßen Verfahrens sieht einen Innenraum zur Aufnahme eines Induktionsgefäßes vor, wobei mindestens eine Induktionsspule dem Reaktor zugeordnet ist. Im Inneren des Reaktors ist gegebenenfalls ein Rührwerk angeordnet, das von einem von außerhalb des Reaktors zugeführten Heizmedium, zum Beispiel thermisches Öl, durchströmbar sein kann und dessen in das Grundmaterial im Induktionsgefäß eintauchende Abschnitte mit einer Quelle für inertes Gas verbunden sind, das über feine Austrittsöffnungen in den Abschnitten auftritt.

Ein Verrühren der Metallspäne ist nicht unbedingt erforderlich. Die Metallspäne stellen einen Wärmeleiter dar, so daß die Abschnitte in die Späne eingetaucht werden können, jedoch nicht rührend betätigt werden müssen. Sie können von einem Heizmedium durchströmt sein, beispielsweise von thermischem Öl. Eine induktive Erwärmung der Metallspäne reicht jedoch aus, um den Gegenstand auf eine ausreichend hohe Temperatur zu bringen. Oberhalb des Gefäßes ist eine von einer Hubvorrichtung betätigbare Platte angeordnet, die auf die Oberfläche der Metallspäne absenkbar ist und die in die Metallspäne eintauchbaren Abschnitte aufweist, die mit einer Quelle für inertes Gas verbunden sind, das über feine Austrittsöffnungen austritt. Die Platte kann auch einen gewissen Abstand zur Oberfläche der Metallspäne haben. Verringert sich indessen das Volumen des Gegenstands, sinkt auch das Niveau der Metallspäne im Gefäß.

Die Platte kann durch die Hubvorrichtung entsprechend nachgeführt werden.

Die Platte und auch die Abschnitte können ebenfalls als Induktionskern dienen und zur Wärmeübertragung beitragen.

Nach einer weiteren Ausgestaltung der Erfindung ist die Wandung des Reaktorraums doppelwandig ausgeführt und so aufgebaut, daß ein mäanderartiger Strömungskanal gebildet ist, durch den das Heizmedium zu Vorwärmzwecken fließt. Der Kanal kann an den Seitenwänden und an der Decke ausgebildet sein und als Vorwärmer dienen zur Erwärmung des Heizmediums, beispielsweise thermisches Öl, das anschließend in das Rührwerk bzw. die einzutauchenden Abschnitte einströmt. Dadurch wird die Erwärmung der Reaktorwandung zur Erwärmung der Metallspäne ausgenutzt. Im übrigen kann auch das Rührwerk als Induktionskern dienen und induktiv erwärmt werden. Hierzu kann eine weitere Spule vorgesehen werden, die zum Beispiel quer um den Reaktor gewickelt wird.

Das Induktionsgefäß muß nicht unbedingt kreisförmig sein, vielmehr kann es länglich ausgebildet sein, zum Beispiel zur Aufnahme länglicher Gegenstände. Es kann im übrigen feste Abmessungen haben, welche gewährleisten, daß die Einbettung eines oder mehrerer Gegenstände in Metallspänen gewährleistet ist.

Die Erfindung wird nachfolgend anhand von Zeichnungen näher erläutert.
- Fig. 1: zeigt schematisch ein Gefäß und Teile eines Reaktors nach der Erfindung.
- Fig. 2: zeigt schematisch die Platte nach Fig. 1.

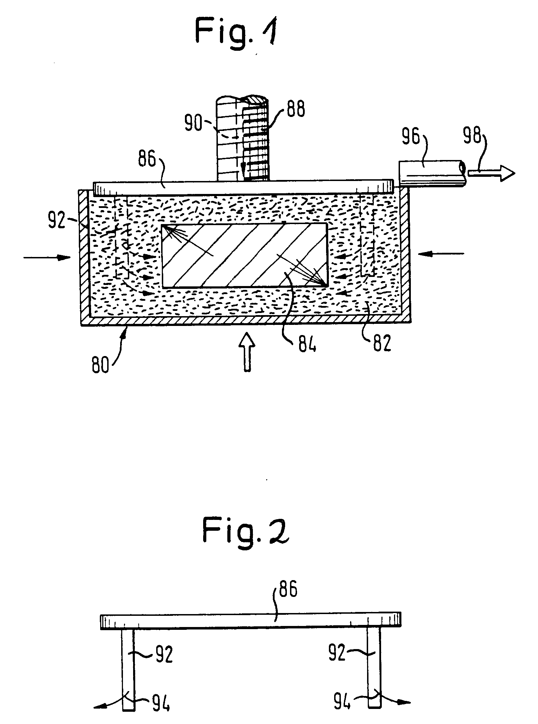

In Fig. 1 ist ein Gefäß 80 aus vorzugsweise metallischem Werkstoff dargestellt, das eine beliebige Form haben kann, beispielsweise kreisförmig, rechteckig, länglich usw. Im Gefäß sind Eisenspäne 82 aufgenommen, in die ein kontaminiertes Holzstück 84 eingebettet ist, beispielsweise eine Eisenbahnschwelle. Die Oberseite des Gefäßes wird von einer Platte 86 abgedeckt, die an einer Spindel 88 aufgehängt ist. Die Spindel 88 ist mit einer nicht gezeigten Hubvorrichtung verbunden und enthält eine axiale Bohrung, wie gestrichelt bei 90 angedeutet. Sie ist an eine nicht gezeigte Quelle für inertes Gas, beispielsweise Stickstoff anschließbar. Wie aus Fig. 1 zu erkennen, sind an der Unterseite der Platte mehrere nach unten abstehende Abschnitte 92 vorgesehen, die mit Kanälen im Inneren der Platte (nicht gezeigt) verbunden sind und die feine Austrittsöffnungen haben, um das inerte Gas abzugeben, wie durch die Pfeile 94 angedeutet.

Das Gefäß wird zum Beispiel in einen nicht gezeigten Reaktor eingesetzt. Der Reaktor weist einen Außenmantel auf. Ein Innenmantel besteht aus isolierendem Aufbau und läßt zum Außenmantel einen Ringraum frei, in dem z.B. zwei Induktorspulen angeordnet sind. Der Reaktor kann an gegenüberliegenden Enden Klappen aufweisen, die um eine untere horizontale Achse schwenkbar sind. In der geöffneten Stellung kann das Induktionsgefäß gefäß 80 eingeschoben bzw. herausgeschoben werden. Es besteht aus einem elektrisch leitenden Material, so daß es mit Hilfe der Spulen erwärmt werden kann. Der Innenraum des Reaktors kann unter Vakuum gesetzt werden, wie durch den Stutzen 96 und den Pfeil 98 angedeutet. Außerdem erfolgt eine induktive Erwärmung durch die nicht gezeigte Induktionsspule, wobei das Gefäß 80 und auch das Bett 82 aus Eisenspänen erwärmt wird. Die Wärme wird auf das Holzstück 84 übertragen. Es kann sich jedoch nicht entzünden, da die Atmosphäre nahezu sauerstofflos ist. Aufgrund des Vakuums treten die im Holzstück 84 vorhandenen flüchtigen Bestandteile aus. Durch Zufuhr von Stickstoff über die beschriebenen Abschnitte 92 können die flüchtigen Stoffe ausgetrieben werden.

In der gezeigten Ausführungsform ist die Platte 86 nicht drehend angetrieben. Sie wird abgesenkt, wenn sich das Niveau des Bettes 82 aus Metallspänen absenkt aufgrund einer Volumenverkleinerung des zu dekontaminierenden Werkstücks. Die Lage der Platte 86 kann durch geeignete Vorkehrungen stets so eingestellt werden, daß sie auf dem Bett der Späne 82 aufliegt.

Nach dem Dekontaminierungsvorgang wird das Gefäß 80 aus dem Reaktor entfernt. Anschließend wird die Platte 86 abgehoben und das Bett 82 aus Eisenspänen zum Beispiel mit Hilfe eines Magneten abgesaugt. Danach kann das Holzstück 84 entnommen werden.

## Patentansprüche

1. Verfahren zur Abscheidung flüchtiger Komponenten aus festen Gegenständen, zum Beispiel aus Holz, Metall oder dergleichen, bei dem
- der Gegenstand in einen gasdichten Raum gegeben,
- in dem Raum ein Vakuum erzeugt und
- zu Spülzwecken inertes Gas injiziert wird,
gekennzeichnet durch die weiteren Verfahrensschritte:
- der Gegenstand wird in ein Induktionsgefäß gegeben,
- der vom Gegenstand freigelassene Bereich in dem Gefäß wird mit Metallspänen aufgefüllt,
- vor dem Entfernen des Gegenstands werden die Metallspäne entfernt.

2. Verfahren nach Anspruch 1, dadurch gekennzeichnet, daß als Spülgas Stickstoff verwendet wird.

3. Verfahren nach Anspruch 1 oder 2, dadurch gekennzeichnet, daß Eisenspäne verwendet werden, die magnetisch aus dem Gefäß entfernt werden.

4. Verfahren nach Anspruch 1, dadurch gekennzeichnet, daß die Metallspäne wiederverwendet werden.

5. Vorrichtung zur Abscheidung flüchtiger Komponenten aus festen Gegenständen, zum Beispiel aus Holz, Metall oder dergleichen, mit einem gasdichten, mindestens eine Aufgabeöffnung aufweisenden Reaktor, dessen Innenraum unter Vakuum setzbar, erwärmbar und an eine Quelle für inertes Gas anschließbar ist, dadurch gekennzeichnet, daß der Reaktor zur Aufnahme eines Induktionsgefäßes (80) mit dem Gegenstand und mit den Gegenstand umgebenden Metallspänen vorgesehen ist, bei dem dem Reaktor mindestens eine Induktionsspule zugeordnet ist, oberhalb des Gefäßes (80) im Reaktor eine von einer Hubvorrichtung betätigbare Platte (86) angeordnet ist, die in die Metallspäne eintauchbare Abschnitte (92) aufweist, die mit der Quelle für inertes Gas verbunden sind, das über feine Austrittsöffnungen in den Abschnitten (92) austritt.

6. Vorrichtung nach Anspruch 5, dadurch gekennzeichnet, daß das Induktionsgefäß (80) kreisförmig ist.

7. Vorrichtung nach einem der Ansprüche 5 oder 6, dadurch gekennzeichnet, daß die Induktionsspule um einen Isolationsmantel des Reaktors herumgewickelt ist.

8. Vorrichtung nach einem der Ansprüche 5 bis 7, dadurch gekennzeichnet, daß auch der Boden des Reaktors als Induktionskern ausgebildet ist.

## Claims

1. A method for separating volatile components from rigid objects, for example wood, metal or likewise, with which
- the object is put into a gas-tight space,
- a vacuum is produced in the space and
- for rinsing purposes inert gas is injected,
- characterised by the further method steps:
- the object is put into an induction vessel,
- the region in the vessel left free by the object is filled with metal filings,
- before removing the object the metal filings are removed.

2. A method according to claim 1, characterised in that as a rinsing gas nitrogen is applied.

3. A method according to claim 1 or 2, characterised in that iron filings are applied which may be magnetically removed from the vessel.

4. A method according to claim 1, characterised in that the metal filings are reused.

5. A device for separating volatile components from rigid objects, for example from wood, metal or likewise, with a gas-tight reactor comprising at least one feed opening, whose inner space may be set under a vacuum, may be heated and may be connected to a source for inert gas, characterised in that the reactor is provided for accommodating an induction vessel (80) with the object and with metal filings surrounding the object, with which at least one induction coil is allocated to the reactor, above the vessel (80) in the reactor there is arranged a plate (86) which can be actuated by a lifting device and which comprises sections (92) which can be immersed into the iron filings and are connected to the source for inert gas which exits via fine exit openings in the sections (92).

6. A device according to claim 5, characterised in that the induction vessel (80) is circular.

7. A device according to one of the claims 5 or 6, characterised in that the induction coil is wound around the induction coil of the reactor.

8. A device according to one of the claims 5 to 7, characterised in that also the floor of the reactor is formed as an induction core.

## Revendications

1. Procédé pour séparer des constituants volatils d'objets solides, par exemple en bois, métal ou analogue, dans lequel
- on place l'objet dans une enceinte étanche aux gaz,
- on produit un vide dans cette enceinte, et
- on injecte un gaz inerte pour effectuer une purge,
caractérisé par les étapes supplémentaires suivantes :
- on place l'objet dans une cuve à induction,
- la zone de la cuve non-occupée par l'objet est remplie de copeaux métalliques,
- avant enlèvement de l'objet, on enlève les copeaux métalliques.

2. Procédé selon la revendication 1, caractérisé en ce que le gaz de purge utilisé est l'azote.

3. Procédé selon la revendication 1 ou 2, caractérisé en ce qu'on utilise des copeaux de fer qui sont enlevés de la cuve par un moyen magnétique.

4. Procédé selon la revendication 1, caractérisé en ce que les copeaux métalliques sont réutilisés.

5. Appareil pour séparer des constituants volatils d'objets solides, par exemple en bois, en métal ou analogue, comportant un réacteur étanche aux gaz, présentant au moins un orifice de chargement, dont l'enceinte intérieure peut être mise sous vide, peut être chauffée et peut être raccordée à une source d'un gaz inerte, caractérisé en ce que le réacteur est prévu pour loger une cuve à induction (80), avec l'objet et les copeaux métalliques entourant l'objet, au moins une bobine d'induction étant associée au réacteur, une plaque (86), pouvant être manoeuvrée par un dispositif de levage, étant disposée dans le réacteur au-dessus de la cuve (80), plaque qui comporte des segments (92) pouvant être noyés dans les copeaux métalliques et communiquant avec la source de gaz inerte, lequel sort par de fines ouvertures de sortie aménagées dans les segments (92).

6. Appareil selon la revendication 5, caractérisé en ce que la cuve à induction (80) est circulaire.

7. Appareil selon l'une des revendications 5 ou 6, caractérisé en ce que la bobine d'induction est enroulée autour d'une enveloppe isolante du réacteur.

8. Appareil selon l'une des revendications 5 à 7, caractérisé en ce que le fond du réacteur est également conçu comme un noyau d'induction.
